Europäisches Patentamt

(19) European Patent Office

Office européen des brevets

(11) Veröffentlichungsnummer: **0 226 222**
**B1**

---

(12) **EUROPÄISCHE PATENTSCHRIFT**

---

(45) Veröffentlichungstag der Patentschrifft:
07.02.90

(21) Anmeldenummer: **86117708.7**

(22) Anmeldetag: **19.12.86**

(51) Int. Cl. ⁵: **B 60 H   1/24**

---

(54) **Kraftfahrzeugmit einer Belüftungsanlage.**

---

(30) Priorität: **20.12.85 DE 3545230**

(43) Veröffentlichungstag der Anmeldung:
**24.06.87 Patentblatt 87/26**

(45) Bekanntmachung des Hinweises auf die Patenterteilung:
**07.02.90 Patentblatt 90/06**

㊽ Bennante Vertragsstaaten:
**DE FR GB**

(56) Entgegenhaltungen:
**EP-A-0 042 287**
**FR-A-2 167 196**
**FR-A-2 186 903**
**US-A-4 593 609**

(73) Patentinhaber: **AUDI AG**
**Auto-Union-Strasse 1 Postfach 220**
**D-8070 Ingolstadt (DE)**

(72) Erfinder: **Leitermann, Wulf, Dipl.-Ing.**
**Kirschenweg 9**
**D-7107 Bad Wimpfen (DE)**

(74) Vertreter: **Speidel, Eberhardt**
**Postfach 1320 Waldpromenade 26**
**D-8035 Gauting (DE)**

---

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf ein Kraftfahrzeug gemäß dem Oberbegriff des Anspruchs 1.

Wenn ein derartiges Fahrzeug bei eingeschaltetem Gebläse rückwärts fährt, können durch das Gebläse erhebliche Abgasmengen in das Fahrzeuginnere gesaugt werden, was nicht nur eine Geruchsbelästigung, sondern unter Umständen auch gesundheitsschädliche Auswirkungen auf die Fahrzeuginsassen haben kann. Dies ist insbesondere dann der Fall, wenn das Fahrzeug nach einem Kaltstart rückwärts aus einer Garage gefahren wird, da beim Kaltstart eine Gemischanreicherung erforderlich ist, die zur Folge hat, daß das Abgas einen erheblichen Anteil an schädlichen Bestandteilen enthält.

Der Erfindung liegt die Aufgabe zugrunde, ein derartiges Ansaugen von Abgasen zu vermeiden.

Zur Lösung dieser Aufgabe wird erfindungsgemäß vorgeschlagen, daß die beiden Klappen derart mit dem Schalthebel des Getriebes verbunden sind, daß bei eingelegtem Rückwärtsgang die Klappe im Ansaugkanal geschlossen und die Klappe im Umluftkanal geöffnet ist. Dadurch wird auch bei eingeschaltetem Gebläse vermieden, daß abgashaltige Luft aus der Umgebung angesaugt wird. Die Klappe im Ansaugkanal braucht dabei nicht absolut dicht zu schließen, da das Gebläse durch den Umluftkanal Luft aus dem Fahrzeuginnenraum absaugen kann, sodaß sich kein hoher Unterdruck im Ansaugkanal aufbauen kann.

Die Verbindung der Klappen mit dem Schalthebel des Getriebes kann auf mechanischem Wege, beispielsweise mittels eines Bowdenzuges, erfolgen. Einfacher ist es jedoch, einen elektrischen Stellmotor für die Klappen vorzusehen, in dessen Stromkreis ein bei eingelegtem Rückwärtsgang geschlossener Schalter angeordnet ist.

Bei Fahrzeugen, die eine Rückfahrleuchte aufweisen, in deren Stromkreis ein bei eingelegtem Rückwärtsgang geschlossener Schalter angeordnet ist, kann der Stromkreis des Stellmotors an den Stromkreis der Rückfahrleuchte angeschlossen werden. Dadurch ist der Aufwand zur Verwirklichung des erfindungsgemäßen Vorschlages denkbar gering.

Der Schalter kann von jedem beliebigen, beim Einlegen des Rückwärtsganges bewegten Teil des Schaltgestänges einschließlich des Schalt- oder Wählhebels betätigt werden, wie dies für die Rückfahrleuchte allgemein bekannt ist.

Zwei Ausführungsbeispiele der Erfindung werden im folgenden unter Bezugnahme auf die Zeichnungen beschrieben. Es zeigt:

Fig. 1     eine Teilansicht eines Kraftfahrzeuges mit einer mechanischen Verbindung zwischen dem dem Gangschalthebel und den Frischluft- und Umluftklappen,

Fig. 2     ein Detail der Fig. 1 in größerem Maßstab, und

Fig. 3     eine Ausführung mit elektrischer Betätigung der Frischluft- und Umluftklappen bei eingelegtem Rückwärtsgang.

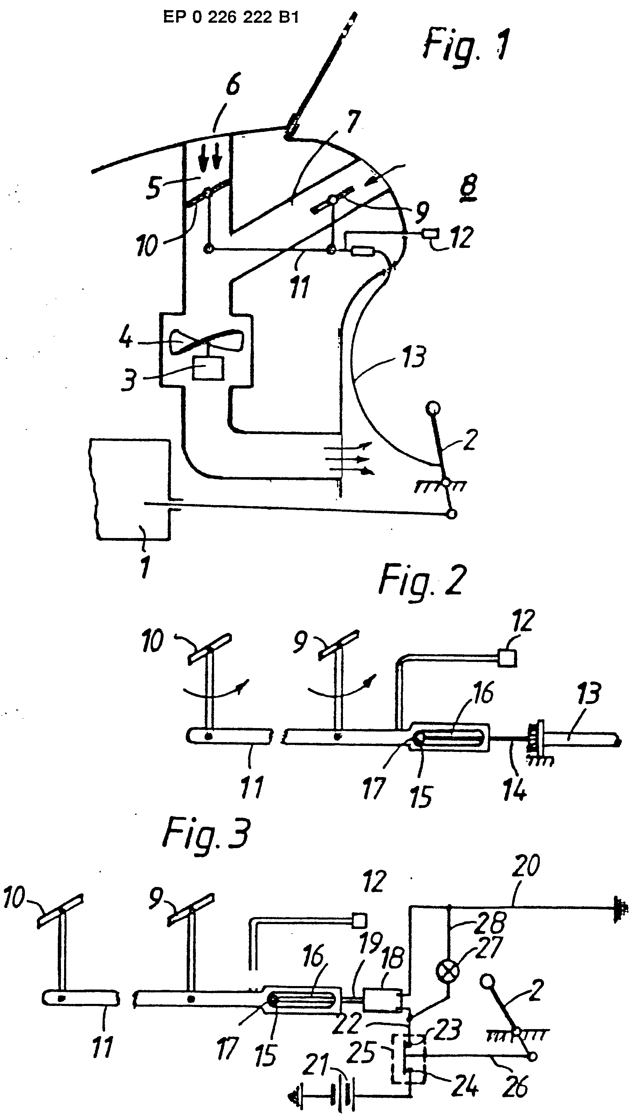

Es sei zunächst auf Fig. 1 Bezug genommen, in der das Vorderteil eines Kraftfahrzeuges dargestellt ist, das ein Getriebe 1 enthält, welches einen durch einen Schalthebel 2 einlegbaren Rückwärtsgang aufweist. Das Kraftfahrzeug ist mit einer Heiz- und Belüftungsanlage versehen, die ein durch einen Elektromotor 3 angetriebenes Gebläse 4 enthält, dessen Ansaugkanal 5 von einer Ansaugöffnung 6 in der Außenhaut des Kraftfahrzeuges ausgeht. In den Ansaugkanal 5 mündet ein Umluftkanal 7, der mit dem Fahrzeuginnenraum 8 in Verbindung steht. In dem Umluftkanal 7 ist eine Umluftklappe 9 und in dem Ansaugkanal 6 ist stromauf der Mündung des Umluftkanals 7 eine Frischluftklappe 10 angeordnet. Die Klappen 9 und 10 sind durch ein Gestänge 11 derart miteinander verbunden, daß die eine Klappe geschlossen ist, wenn die andere Klappe offen ist. Die beiden Klappen 9 und 10 können gemeinsam durch einen am Gestänge 11 angreifenden Handhebel 12 manuell verstellt werden. Außerdem ist zwischen dem Gestänge 11 und dem Schalthebel 2 eine Verbindung vorgesehen, die im Ausführungsbeispiel gemäß Fig. 1 von einem Bowdenzug 13 gebildet ist, dessen Seele 14 einerseits am Schalthebel 2 befestigt und andererseits mit dem Gestänge 11 verbunden ist. Dabei greift der Nippel 15 der Seele 14 in ein Langloch 16 im Gestänge 11 ein und schiebt beim Einlegen des Rückwärtsganges das Gestänge 11 durch Anlage an dem Ende 17 des Langloches 16 in der Zeichnung nach links, sodaß die beiden Klappen 9 und 10 die dargestellte Lage einnehmen, also die Umluftklappe 9 geöffnet und die Frischluftklappe 10 geschlossen ist. Dadurch wird verhindert, daß beim Rückwärtsfahren das Gebläse 4 abgasverseuchte Luft durch die Öffnung 6 ansaugt. In jeder anderen Stellung des Schalthebels 2 befindet sich der Nippel 15 in einer solchen Lage im Langloch 16, daß das Gestänge 11 von dem Handhebel 12 willkürlich verschoben werden kann.

Im Ausführungsbeispiel gemäß Fig. 3 werden die Klappen 9 und 10 durch einen elektrischen Stellmotor 18, beispielsweise einen Hubmagneten, bei Einlegen des Rückwärtsganges in die gezeigten Stellungen gebrecht. Hierbei ist der Anker 19 des Stellmotors auf die gleiche Weise wie die Seele 14 des Bowdenzugs 13 beim ersten Ausführungsbeispiel mit dem Gestänge 11 verbunden. Die Wicklung des Stellmotors 18 ist einerseits über eine Leitung 20 mit Masse, d. h., mit dem Minuspol der Fahrzeugbatterie 21 verbunden. In der anderen Zuleitung 22, die mit dem Pluspol der Fahrzeugbatterie 21 verbunden ist, ist ein Kontaktpaar 23, 24 eines Schalters 25 angeordnet, der ein Schaltelement 26 aufweist, das bei Betätigung des Schalthebels 2 verschoben wird, und zwar derart, daß beim Einlegen des Rückwärtsganges das Kontaktpaar 23, 24 geschlossen wird, sodaß der Stellmotor 18 erregt wird, wodurch sein Anker 19 in der Zeichnung nach links verschoben wird und seinerseits in der vorher beschriebenen Weise das Gestänge 11 verschiebt und die Klappen 9 und 10 in die dargestellte Lage bringt. An die Zuleitung 22 zwischen dem Kontakt 23 und der Anschlußklemme des Stellmotors 18 ist eine Rückfahrleuchte 27 angeschlossen, die andererseits durch eine Leitung 28 mit Masse verbunden ist. Somit kann der üblicherweise vorgesehene Schalter für die Rückfahrleuchte zusätzlich zur Betätigung des Stellmotors 18 eingesetzt werden.

**Patentansprüche**

1. Kraftfahrzeug mit einem Getriebe, das einen durch einen Schalthebel (2) einlegbaren Rückwärtsgang aufweist, und mit einer Heiz- und Belüftungsanlage, die ein durch einen Elektromotor angetriebenes Gebläse (4) mit einem Ansaugkanal (5) enthält, der von einer Stelle an der Außenhaut des Kraftfahrzeuges ausgeht und in den ein mit dem Fahrzeuginnenraum (8) in Verbindung stehender Umluftkanal (7) mündet, wobei im Umluftkanal sowie im Ansaugkanal stromauf der Mündung des Umluftkanals jeweils eine Absperrklappe (9, 10) angeordnet ist und beide Klappen derart miteinander verbunden sind, daß die eine geschlossen ist, wenn die andere geöffnet ist, *dadurch gekennzeichnet*, daß die beiden Klappen (9, 10) derart mit dem Schalthebel (2) des Getriebes (1) verbunden sind, daß bei eingelegtem Rückwärtsgang die Klappe (10) im Ansaugkanal (5) geschlossen und die Klappe (9) im Umluftkanal (7) geöffnet ist.

2. Kraftfahrzeug nach Anspruch 1, gekennzeichnet durch einen elektrischen Stellmotor (18) für die Klappen (9, 10) in dessen Stromkreis ein bei eingelegtem Rückwärtsgang geschlossener Schalter (25) angeordnet ist.

3. Kraftfahrzeug nach Anspruch 2, des eine Rückfahrleuchte (27) aufweist, in deren Stromkreis ein bei eingelegtem Rückwärtsgang geschlossener Schalter (25) angeordnet ist, dadurch gekennzeichnet, daß der Stromkreis des elektrischen Stellmotors (18) an den Stromkreis der Rückfahrleuchte (27) angeschlossen ist.

**Claims**

1. Motor vehicle with a transmission which comprises a reverse gear engageable by a gear shift lever (2), and with a heating and ventilation device which comprises a blower (4) driven by an electric motor and comprising a

suction duct (5) which starts from a spot at the outer shell of the motor vehicle and into which a circulating air duct (7) opens which is in communication with the vehicle compartment (8), wherein a shut-off flap (9, 10) is arraganged within the circulating air duct and within the suction duct upstream of the connection of the circulating air duct and both flaps are interconnected in such way that one flap is closed when the other is openend, *characterized* in that the two flaps (9, 10) are connected to the gear shift lever (2) in such way that with the reverse gear engaged the flap (10) within the suction duct (5) is closed and the flap (9) within the circulating air duct (7) is opened.

2. Motor vehicle according to claim 1, characterized by an electric servo motor (18) for the flaps having a switch (25) in its circuit which switch is closed when the reverse gear is enganged.

3. Motor vehicle according to claim 2 which comprises a reversing lamp (27) with a switch (25) in its circuit which switch is closed when the reverse gear is engaged, characterized in that the circuit of the electric servo motor (18) is connected to the circuit of the reversing lamp (27).

**Revendications**

1. Véhicule automobile comportant une boîte de vitesses qui présente une vitesse arrière qui peut être enclenchée au moyen d'un levier de changement de vitesses (2), et qui comporte aussi une installation de chauffage et d'aération qui contient un ventilateur (4) entraîné par un moteur électrique présentant un canal d'aspiration (5), qui part d'un emplacement sur la peau extérieure du véhicule et dans lequel débouche un canal (7) de circulation d'air qui est en liaison avec un espace intérieur (8) du véhicule, un volet de blocage (9, 10) étant disposé dans le canal de circulation d'air comme dans le canal d'aspiration en amont du débouché du canal de circulation d'air et les deux volets étant reliés l'un à l'autre de telle façon que l'un est fermé lorsque l'autre est ouvert, caractérisé en ce que les deux volets (9, 10) sont reliés au levier de changement de vitesses (2) de la boîte de vitesses (1) de telle façon que lorsque la marche arrière est enclenchée, le volet (10) dans le canal d'aspiration (5) soit fermé et le volet (9) dans le canal de circulation d'air (7) soit ouvert.

2. Véhicule selon la revendication 1, caractérisé par un moteur électrique (18) de commande pour les volets (9, 10) dans le circuit duquel est disposé un commutateur (25) fermé lorsque la marche arrière est enclenchée.

3. Véhicule selon la revendication 2, qui présente des feux de recul (27) dans le circuit desquels est disposé un commutateur (25) fermé lorsque la marche arrière est enclenchée, caractérisé en ce que le circuit du moteur électrique (18) de commande est raccordé au circuit électrique des feux de marche arrière (27).

*Fig. 1*

*Fig. 2*

*Fig. 3*